Europäisches Patentamt

European Patent Office

Office européen des brevets

(11) Publication number: **0 189 170**
**B1**

(12) **EUROPEAN PATENT SPECIFICATION**

(45) Date of publication of patent specification: **11.10.89**

(51) Int. Cl.⁴: **F 16 K 31/60, F 16 K 35/02**

(21) Application number: **86100742.5**

(22) Date of filing: **21.01.86**

(54) Single-grip lever water tap.

(30) Priority: **24.01.85 FI 850315**

(43) Date of publication of application:
**30.07.86 Bulletin 86/31**

(45) Publication of the grant of the patent:
**11.10.89 Bulletin 89/41**

(84) Designated Contracting States:
**AT CH DE FR GB LI NL SE**

(56) References cited:
**DE-A-2 101 580**
**DE-C-3 402 103**
**DE-U-1 920 254**
**US-A-4 456 219**

(73) Proprietor: **ORAS OY**
**Rauhankatu 28**
**SF-26100 Rauma (FI)**

(72) Inventor: **Koppanen. Jorma Tapani**
**Puolukkatie 31**
**SF-26660 Rauma (FI)**

(74) Representative: **UEXKÜLL & STOLBERG**
**Patentanwälte**
**Beselerstrasse 4**
**D-2000 Hamburg 52 (DE)**

Courier Press, Leamington Spa, England.

## Description

The present invention relates to a single-grip lever water tap in which the amount of mixed water are adjusted by raising and lowering the lever, the temperature being adjusted by turning the lever, and the movable lever and the stationary body have stop means working in conjunctin with each other to limit the preselected extreme position of the turning movement of the lever, and to a single-grip lever tap in which the the amount of mixed water are adjusted by raising and lowering the lever, the temperature being adjusted by turning the lever, and the movable lever and the stationary body have stop means working in conjunction with each other to limit the preselected extreme position of the turning movement of the lever, the lever being additionally equipped with user-controlled release means by the moving of which the said extreme position limit can be overridden.

A single-grip lever tap of this type is previously known from, for example, DE—C—34 02 103. It has a spring-loaded pressbutton attached with bearings to the control lever, and, attached to the pressbutton, a pin working in conjunction with the stop in the body of the tap, in which case the limiting pin can pass beyond the said stop when the pressbutton is pressed. In terms of manufacture, this structure has a disadvantage in its complicated structure and partial weakness of material, which is, among other things, dependent on the strength of the pin. In addition such a pin structure is cumbersome if it is desired that it will function smoothly in the different turning and lifting positions of the lever.

The object of the present invention is therefore to provide a single-grip lever tap having a possibility of limiting the temperature and having a button enabling this stop to be overridden, but in such a way that the structure of the tap is not immoderately complicated and that the limiting mechanism is at the same time both reliable in operation and has a long useful life. In order to accomplish this, the lever tap according to the invention is characterized in that the stop means in the body is a shoulder formed in the cup-like part below the central part of the lever and parallel to the side line of the cup, and that the stop in the lever is a stop part oriented towards the said shoulder and normally engaging it, the stop part being raisable over the shoulder.

According to one advantageous embodiment of the invention the release means consists of a trigger attached so that it can turn inside the central part, one of its ends serving as the stop part in the lever and the other end being capable of being affected from outside the lever. One end of the trigger can be shaped into a pressbutton which protrudes from an opening at the root of the lever.

Certain advantageous features and details of the invention are disclosed in greater detail in the dependent claims and in the following description, in which reference is made to the accompanying drawings.

Figure 1 depicts a cross section of the upper part of a single-grip lever tap, the part being, according to one embodiment, equipped with the mechanism according to the invention,

Figure 2 depicts a top view of the lever tap according to Figure 1,

Figure 3 depicts a top view of the trigger,

Figure 4 depicts a cross section of the protective cup of the upper part of the tap,

Figure 5 depicts a top view of the protective cup,

Figures 6 and 7 depict another embodiment of the protective cup, in a manner corresponding to that in Figures 4 and 5,

Figure 8 depicts another embodiment of the single-grip lever tap according to the invention, deviating somewhat from that shown in Figure 1,

Figure 9 depicts one more embodiment of the invention, and

Figure 10 is a partial cross section along line A in Figure 9.

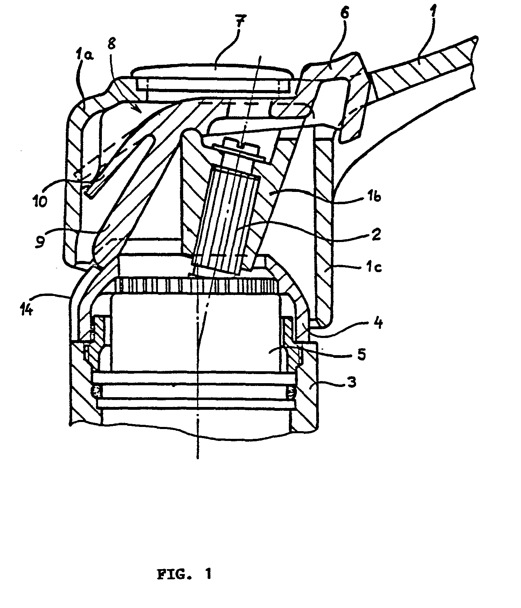

Figure 1 thus shows a cross section of the upper part of a conventional single-grip lever tap. The lower part, which in a manner known to an expert in the art includes the water-mixing part with its ceramic plates, is not shown here. The movable lever of the tap comprises a protrusion, i.e. the actual lever 1, which is cut in the figure, the upper part 1a, the interior part 1b, and the skirting part 1c around the interior part, all of these parts making up one unit. This lever is attached by means of a screw to a spindle 2, which in a known manner moves the movable upper ceramic plate. The amount of mixed water is adjusted by raising and lowering the lever 1, and the temperature of mixed water is adjusted by turning the lever to the right or to the left.

With reference still to Figure 1, the turning movement of the lever 1 is limited as follows. The protective cup 4 fastened to the upper part of the body of the tap is designed so as to have a spherical exterior surface, and furthermore, a shoulder, or stop 14, parallel to the side line of the cup, has been made in this exterior surface. The end 9 of release means consisting of a trigger 8, oriented obliquely downwards, engages this stop, the trigger being turnably attached to the interior part 1b of the lever, the opposite end of the trigger forming a pressbutton 6. When the lever 1 is turned in this case sufficiently far to the left (to the hot side), part 9 of the trigger comes against the stop 14, thereby limiting the movement of the lever. When the pressbutton 6 is pressed downwards, the part 9 rises over the stop 14, whereupon the lever 1 can be turned further to the left, all the way to the extreme position.

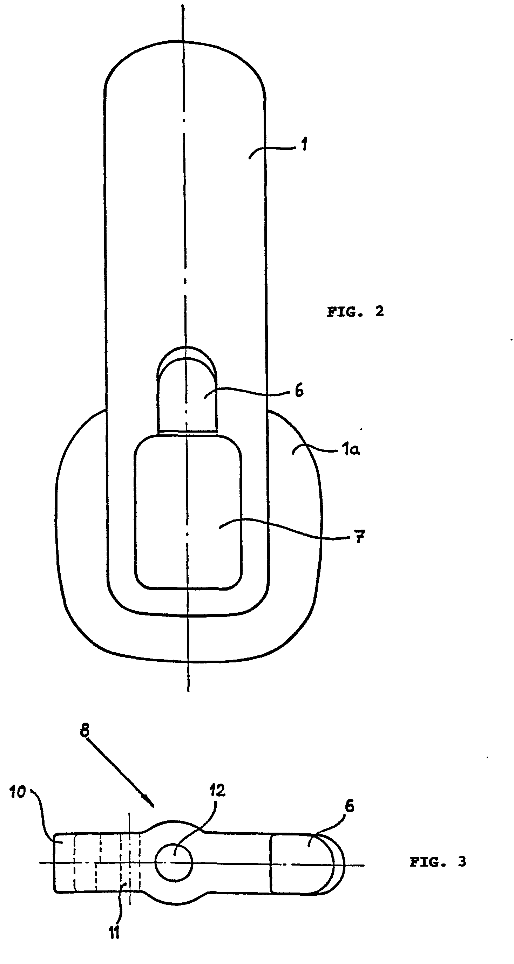

Figure 2 depicts a top view of the tap. The fastening screw of the lever 1 is covered by a covering plate 7, and the pressbutton 6 protrudes from the opening next to the covering plate 7.

Figure 3 shows a top view of the trigger, which is in general indicated by numeral 8. The trigger is preferably made from a resilient strong plastic material. The end opposite in relation to the pressbutton 6 is preferably branched in such a way that the thinner, resilient tongue 10 at the same time forms a spring which keeps the part 9 in contact with the exterior surface of the protective cup 4. The trigger has in the middle a groove 11 having the shape of a partial cylinder, the groove leaning against a correspondingly designed area in part 1b, thereby forming the turning axis of the trigger. In addition, the trigger is provided with a hole 12 through which the lever can be fastened to the spindle 2.

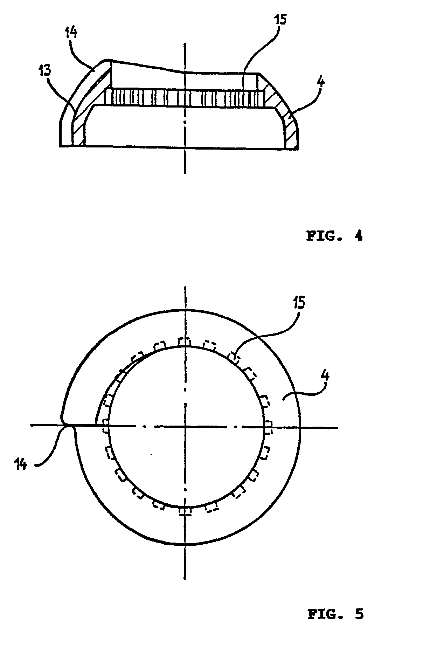

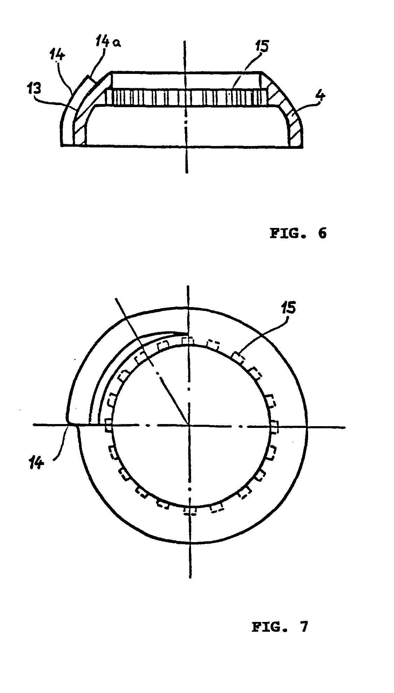

The shape of the protective cup 4 is better seen in Figures 4 and 5. The outer surface 13 of the protective cup is mainly spherical in such a way that the center point of the spherical surface is the same as the center point of the movement of the lever 1. In this manner the part 9 of the trigger remains steadily against the surface 13 of the protective cup 4, regardless of the movements of the lever 1. The stop or shoulder 14, protrudes from this spherical surface, as is best seen in Figure 4. The limiting position determined by the stop 14 can, furthermore, be selected by positioning the protective cup 4 in the desired manner in relation to the body of the tap. For this purpose the protective cup is provided with inside ring-like toothing 15, which can engage a correspondingly shaped sleeve-like part 5 fastened to the body, the part 5 being shown in Figure 1. Shifting the position of the protective cup 4 requires, of course, that the cover 7 of the lever tap be removed and the lever 1 be detached from the spindle 2, whereafter the protective cup 4 can be raised and positioned at a new angle.

Figures 6 and 7 depict a slightly different embodiment of the protective cup. The protective cup is in other respects similar to that in Figures 4 and 5, but at the top the shoulder 14 is cut in such a way that a second shoulder 14a, extending towards the periphery, is formed. The purpose of this shoulder is to prevent the tap from being opened from the closed position when the lever 1 has been turned beyond the limit position determined by the stop 14. For this purpose the part 9 of the trigger 8 is so long that, when the tap is in the closed position, the lower end of the part 9 remains just above the shoulder 14a. In this case the trigger can be moved over the stop 14 when the tap is open, but a tap which has been turned to a position giving too hot water cannot be opened without first turning it to the "permitted range".

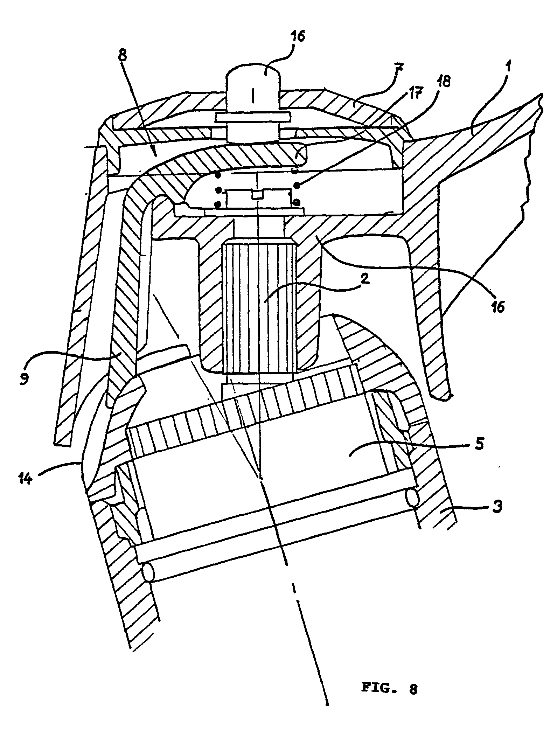

Figure 8 depicts an embodiment slightly different from that in Figure 1. The structure is the same as in Figure 1, but the end 17 of the trigger remains inside the upper part of the lever and is affected by means of a separate pressbutton 16 in the center, the pressbutton being loaded by a helical spring 18 leaning against the central part 1b. It is clear that even in this case the resilience could be in the trigger itself.

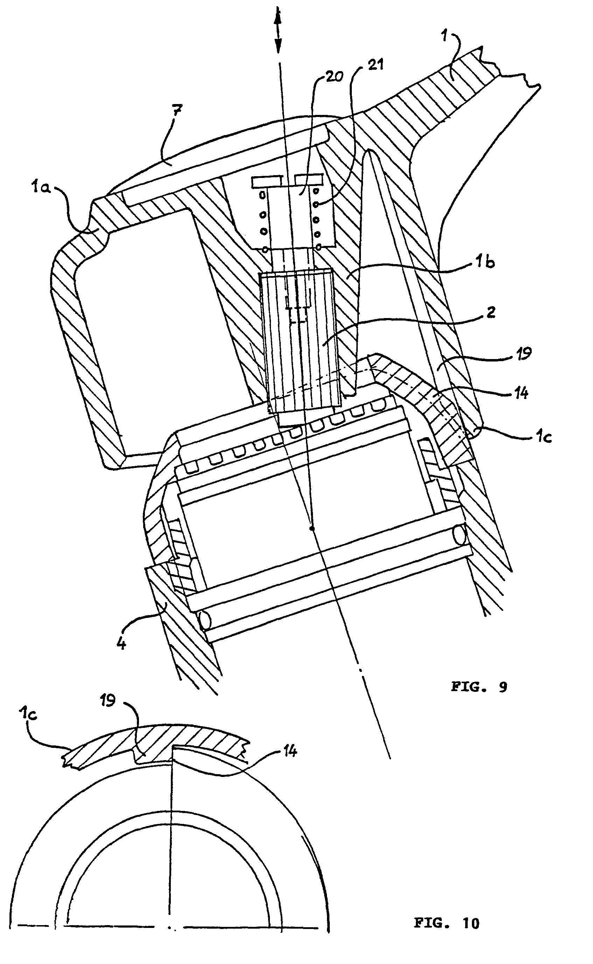

Finally, Figures 9 and 10 depict one alternative embodiment, which has no trigger but in which the lever 1 itself can be lifted in order to release the limiting action. In this case the inner surface of the skirting part 1c of the lever 1 is provided with a shoulder 19, which hits the shoulder 14 in the protective cup 4. When the lever 1 is in the normal position, the shoulder 19, as seen from above, remains on the right-hand side of the shoulder 14, as seen in Figure 10. The limit position can be overridden by raising the entire lever 1 upwards, the spring 21 compressing between the head of the fastening screw 20 and the central part 1b. If it is desired also to prevent the tap from being opened when the lever has in advance been turned to a position giving too hot water, the lower edge of the shoulder 14 must be cut and the corresponding point in the upper edge of the shoulder 19 must also be cut, so that an operation corresponding to that described in connection with Figures 6 and 7 is obtained.

## Claims

1. A single-grip lever tap in which the amount of mixed water is adjusted by raising and lowering a lever (1), the temperature being adjusted by turning the lever (1), and the movable lever (1) and the stationary body (3, 4, 5) of the valve have stops (9, 14; 19, 14) which work in conjunction with each other to limit the preselected extreme position of the turning movement of the lever, and the lever (1) being additionally provided with release means (8; 20, 21) controllable by the user, the said extreme position limit being capable of being overridden by moving the release means, characterized in that the stop in the body (3, 4, 5) of the valve is a shoulder (14) formed on the spherical exterior surface of a cup-like part (4) of the valve body, located below the center of the lever, the shoulder (14) being parallel to the side line of the cup, and that the stop in the lever (1) is a stop part (9; 19) being part of the release means and facing the said shoulder (14) and normally engaging it, the stop being raisable over the shoulder (14) by operating the release means (8; 20, 21), whereby the release means is a trigger (8) turnably attached to the lever (1) or the lever (1) itself.

2. A lever tap according to Claim 1, characterized if that the trigger (8) is turnably attached inside the central part of the lever (1), one end (9) of the trigger serving as the stop part in the lever (1) and the other end (6; 17) being capable of being affected from outside the lever (1).

3. A lever tap according to Claim 2, characterized in that the one end of the trigger (8) is shaped into a pressbutton (6) which protrudes from an opening in the lever (1), for example at the root of the lever.

4. A lever tap according to Claim 2, characterized in that one end (17) of the trigger (8) can be affected by means of a pressbutton (16) protruding from the lever (1).

5. A lever tap according to Claim 2, characterized in that the trigger (8) is loaded by means of a spring (18) resting against the body part (1b) of the lever.

6. A lever tap according to Claim 2, characterized in that the trigger (8) is provided with a resilient protrusion (10) which serves as a spring means against the inner wall of the lever (1).

7. A lever tap according to Claim 1, characterized in that the stop part in the lever (1) is a shoulder (19) or the like inside the skirting part (1c) of the lever, the lever (1) being fitted to be entirely raisable upwards against the spring force (18) in order to raise the stop part (19) over the shoulder (14).

8. A lever tap according to Claim 1, characterized in that the said cup-like body part (4) is provided with ring-like toothing (15) or the like so that it can be placed in different positions in relation to the rest of the body (5) in order to select the desired limiting position.

9. A lever tap according to Claim 1, characterized in that on that side of the shoulder (14) where the extreme position limit is overridden there is another stop (14a), which acts in conjunction with the lever (1) and prevents the tap from being opened within this area from the closed position.

10. A lever tap according to Claim 9, characterized in that that part of the shoulder (14) which is at the side of the trigger is cut, this cut forming the said second stop (14a).

## Patentansprüche

1. Einhand-Hebelwasserhahn, bei dem die Mende des gemischten Wassers durch Heben und Senken eines Hebels (1) eingestellt wird, während die Temperatureinstellung durch Drehen des Hebels (1) erfolgt und der bewegbare Hebel (1) und der stationäre Körper (3, 4, 5) des Ventils Anschläge (9, 14; 19, 14) haben, die miteinander zusammenwirken, um die vorgegebene Extremstellung der Drehbewegung des Hebels zu begrenzen, und wobei der Hebel (1) zusätzlich mit Freigabemitteln (8; 20, 21) versehen ist, die von dem Benutzer steuerbar sind, wobei die Extremstellung durch Bewegung der Freigabemittel überwunden werden kanne, dadurch gekennzeichnet, daß der Anschlag im Körper (3, 4, 5) des Ventils eine Schulter (14) ist, die auf der kugelförmigen Außenfläche eines schalenartigen Teils (4) des Ventilskörpers gebildet ist, der unter dem Mittelpunkt des Hebels liegt, wobei die Schulter (14) parallel zur Seitenlinie der Schale verläuft, daß der Anschlag in dem Hebel (1) ein Anschlagteil (9; 19) ist, das Teil des Freigabemittels ist und der Schulter (14) zugewandt ist und diese normalerweise erfaßt, und daß der Anschlag über die Schulter (14) durch Betätigen des Freigabemittels (8; 20, 21) gehoben werden kann, so daß das Freigabemittel ein Abzug (8) ist, der drehbar an dem Hebel (1) angebracht ist oder der Hebel (1) selbst ist.

2. Hebelwasserhahn nach Anspruch 1, dadurch gekennzeichnet, daß der Abzug (8) drehbar im Inneren des Mittelteils des Hebels (1) angebracht ist, wobei ein Ende (9) des Abzugs als Anschlagteil im Hebel (1) dient und das andere Ende (6; 17) von außerhalb des Hebels (1) beeinflußbar ist.

3. Hebelwasserhahn nach Anspruch 2, dadurch gekennzeichnet, daß ein Ende des Abzugs (8) als Drucktaster (6) geformt ist, der aus einer Öffnung im Hebel (1) vorsteht, beispielsweise am Fuß des Hebels.

4. Hebelwasserhahn nach Anspruch 2, dadurch gekennzeichnet, daß ein Ende (17) des Abzugs (8) durch einen Drucktaster (16) beeinflußbar ist, der aus dem Hebel (1) vorsteht.

5. Hebelwasserhahn nach Anspruch 2, dadurch gekennzeichnet, daß der Abzug (8) durch eine Feder (18) belastet ist, die sich an dem Körperteil (1b) des Hebels abstützt.

6. Hebelwasserhahn nach Anspruch 2, dadurch gekennzeichnet, daß der Abzug (8) mit einem nachgiebigen Vorsprung (10) versehen ist, der als Federmittel gegen die Innenwand des Hebels drückt.

7. Hebelwasserhahn nach Anspruch 1, dadurch gekennzeichnet, daß der Anschlagteil in dem Hebel (1) eine Schulter (19) o.ä. im Inneren eines Schürzenteils (1c) des Hebels ist, wobei der Hebel (1) so angepaßt ist, daß er zur Gänze aufwärts gegen die Federkraft (18) bewegt werden kann, um das Anschlagteil (19) über die Schulter (14) zu heben.

8. Hebelwasserhahn nach Anspruch 1, dadurch gekennzeichnet, daß der schalenartige Körperteil (4) mit einer ringartigen Verzahnung (15) o.ä. versehen ist, so daß er in verschiedenen Stellungen in bezug auf den übrigen Teil des Körpers (5) aufsetzbar ist, um die gewünschte Grenzstellung auszuwählen.

9. Hebelwasserhahn nach Anspruch 1, dadurch gekennzeichnet, daß an einer Seite der Schulter (14), an der die Grenzstellung überwunden wird, ein anderer Anschlag (14a) vorgesehen ist, der mit dem Hebel (1) zusammenwirkt und den Wasserhahn daran hindert, in diesem Bereich aus der geschlossenen Stellung geöffnet zu werden.

10. Hebelwasserhahn nach Anspruch 9, dadurch gekennzeichnet, daß der Teil der Schulter (14), der an der Seite des Abzugs liegt, eingeschnitten ist, wobei dieser Einschnitt den zweiten Anschlag (14a) bildet.

## Revendications

1. Robinet à un seul levier de manoeuvre, dans lequel le débit de l'eau mélangée est réglé en levant et en abaissant un levier (1), la température éant réglée en tournant le levier (1), et le levier mobile (1) et le corps stationnaire (3, 4, 5) du robinet ayant des butées (9, 14; 19, 14) qui coopèrent l'une avec l'autre pour limiter la position extrême présélectionnée du mouvement de rotation du levier, le levier (1) comportant en outre des moyens de dégagement (8, 20, 21) pouvant être commandés par l'utilisateur, la position extrême pouvant être dépassée en déplaçant les moyens de dégagement, caractérisé en ce que la butée dans le corps (3, 4, 5) du robinet est un épaulement (14) formé dans la surface extérieure sphérique d'une partie en forme de capuchon (4) du corps de robinet, situé en dessous du centre du levier, l'épaulement (14) étant parallèle à la ligne latérale du capuchon, et en ce que la butée dans le levier (1) est une partie de butée (9; 19) faisant partie des moyens de dégagement et se trouvant en vis-à-vis de l'épaulement (14) et coopérant normalement avec lui, la butée pouvant être soulevée au-dessus de l'épaulement (14) en actionnant les moyens de dégagement (8; 20, 21), ces moyens de dégagement étant constitués par un déclencheur (8) fixé à pivotement sur le levier (1) ou étant constitués par le levier (1) lui-même.

2. Robinet à levier selon la revendication 1, caractérisé en ce que le déclencheur (8) est fixé, pivotant, à l'intérieur de la partie centrale du levier (1), une extrémité (9) du déclencheur servant de la partie de butée dans le levier (1), et l'autre extrémité (6; 17) pouvant être actionnée de l'extérieur du levier (1).

3. Robinet à levier selon la revendication 2, caractérisé en ce qu'une extrémité du déclencheur (8) a la forme d'un bouton-poussoir (6) qui dépasse d'une ouverture dans le levier (1), par exemple à la base du levier.

4. Robinet à levier selon la revendication 2, caractérisé en ce qu'une extrémité (17) du déclencheur (8) peut être actionnée au moyen d'un bouton-poussoir (16) dépassant du levier (1).

5. Robinet à levier selon la revendication 2, caractérisé en ce que le déclencheur (8) est assujetti à un ressort (18) reposant contre la partie de corps (1b) du levier.

6. Robinet à levier selon la revendication 2, caractérisé en ce que le déclencheur (8) comporte une saillie élastique (10) qui sert de ressort contre la paroi latérale du levier (1).

7. Robinet à levier selon la revendication 1, caractérisé en ce que la partie de butée dans le levier (1) est constituée par un épaulement (19) ou l'analogue à l'intérieur de la jupe (1c) du levier, le levier (1) étant monté pour pouvoir être entièrement levé vers le haut contre la force d'un ressort (18) afin d'élever la partie de butée (19) au-dessus de l'épaulement (14).

8. Robinet à levier selon la revendication 1, caractérisé en ce que la partie de corps en forme de capuchon (4) comporte une denture annulaire (15) ou l'analogue, de telle sorte qu'elle peut être placée dans différentes positions par rapport au reste du corps (5) afin de sélectionner la position limite désirée.

9. Robinet à levier selon la revendication 1, caractérisé en ce que sur ce côté de l'épaulement (14) où est dépassée la position limite extrême, il y a une autre butée (14a) qui agit en liaison avec le levier (1) et empêche d'ouvrir le robinet avec cette zone en provenance de la position fermée.

10. Robinet à levier selon la revendication 9, caractérisé en ce que cette partie de l'épaulement (14) qui se trouve au niveau du côté du déclencheur, est découpée, cette découpure formant la deuxième butée (14a).

FIG. 1

FIG. 2

FIG. 3

FIG. 4

FIG. 5

FIG. 6

FIG. 7

EP 0 189 170 B1

FIG. 8

5

**FIG. 9**

**FIG. 10**